(19) Europäisches Patentamt

European Patent Office

Office européen des brevets

(11) **EP 1 717 292 A2**

(12) **EUROPEAN PATENT APPLICATION**

(43) Date of publication:
**02.11.2006 Bulletin 2006/44**

(51) Int Cl.:
**C09K 11/59** *(2006.01)*

(21) Application number: **06112827.8**

(22) Date of filing: **20.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.04.2005 KR 20050032796**

(71) Applicant: **Samsung SDI Co., Ltd.**
**Suwon-si**
**Gyeonggi-do (KR)**

(72) Inventors:
- **Kim, Yong-Seon,**
  **c/o Samsung SDI Co., Ltd.**
  **Suwon-si, Gyonggi-do (KR)**
- **Song, Mi-Ran,**
  **c/o Samsung SDI Co., Ltd.**
  **Suwon-si, Gyeonggi-do (KR)**
- **Lee, Hyun-Deok,**
  **c/o Samsung SDI Co., Ltd.**
  **Suwon-si,**
  **Gyeonggi-do (KR)**

- **You, Young-Chul,**
  **c/o Samsung SDI Co., Ltd.**
  **Suwon-si,**
  **Gyeonggi-do (KR)**
- **Kwon, Seon-Young,**
  **c/o Samsung SDI Co., Ltd.**
  **Suwon-si,**
  **Gyeonggi-do (KR)**
- **Choi, Ick-Kyuc/o Samsung SDI Co., Ltd.**
  **Gyeongg-do (KR)**
- **Park, Kyu-Chanc/o Samsung SDI Co., Ltd.**
  **Gyeonggi-do (KR)**
- **Kim, Ji-Hyun,**
  **c/o Samsung SDI Co., Ltd.**
  **Suwon-si, Gyeonggi-do (KR)**

(74) Representative: **Hengelhaupt, Jürgen**
**Gulde Hengelhaupt Ziebig & Scheider**
**Wallstrasse 58/59**
**10179 Berlin (DE)**

(54) **Phosphor composition for plasma display panel, and plasma display panel having phosphor layer composed of the phosphor composition**

(57) Provided are a phosphor composition for a plasma display panel (PDP) including: a phosphor component which is composed of a zinc silicate-based phosphor represented by the formula of $Zn_2SiO_4$:Mn or of a mixture of the zinc silicate-based phosphor represented by the formula of $Zn_2SiO_4$:Mn and at least one further phosphor; and a continuous crystalline metal oxide layer composed of at least one positively charged metal oxide formed on the phosphor component, particularly composed of yttrium oxide ($Y_2O_3$), and a PDP having a phosphor layer composed of the phosphor composition. The phosphor composition for a PDP has a continuous crystalline layer composed of a positively charged metal oxide such as yttrium oxide, and thus has better surface properties. The metal oxide layer acts as a protecting layer to prevent deterioration of the phosphor due to ion bombardment. When the phosphor composition is used to manufacture a green phosphor layer for a PDP, a green discharge voltage can be controlled to levels of red and blue colours due to a better surface charge property and a poor specific gradation discharge problem can be resolved.

**EP 1 717 292 A2**

**Description**

BACKGROUND OF THE INVENTION

Field of the Invention

The present embodiments relate to a phosphor composition for a plasma display panel (PDP) and a PDP having a phosphor layer formed of the phosphor composition, and more particularly, to a phosphor composition having an improved discharge property and an increased lifespan due to prevention of deterioration of the phosphor caused by plasma, and a PDP having a phosphor layer composed of the phosphor composition.

Description of the Related Art

A phosphor is a material which emits light in response to energy stimulation that is generally used in light sources such as a Hg fluorescent lamp, a free-Hg fluorescent lamp, etc., various devices such as a field emission device (FED), a plasma display panel (PDP), etc., and various additional uses are expected with development of new multi-media devices.

Phosphors included in apparatuses such as light sources or devices should be able to absorb an excitation light that is generated in such apparatuses and become excited and have physical properties, such as current saturation, deterioration, luminance and colour purity, suitable for each apparatus.

For example, a PDP excites a phosphor with an excitation light having a vacuum ultra violet (VUV) ray wavelength in a range of about 147 to 200 nm using Xe as a discharge gas.

To increase the luminance of the phosphor, a method of forming a coating layer on the phosphor is disclosed in Japanese Patent Publication No. 9-70936. According to the method, a material coated on the phosphor has a lower refractive index than the phosphor and has a thickness selected so as to satisfy $(2m+1)\lambda/4n$ (in which n is a refractive index of the coating layer and m is 0, 1, 2, 3,..., and $\lambda$ is a wavelength of an excitation ultra violet ray). A method of increasing an excitation efficiency of the ultra violet ray by coating an oxide on the phosphor by a predetermined distance has also been proposed.

A method of improving fluidity of a phosphor to be suitable for the preparation of a phosphor ink by forming a coating layer having protrusions or a coating film on the phosphor is described in Japanese Patent Application No. 10-258297.

In some examples of a PDP, a mixture of $ZnSiO_4$:Mn, $YBO_3$:Tb and $(Ba,Sr)MgAl_{10}O_{19}$:Mn is used as a green phosphor.

When the green phosphor is used, a good discharge property is obtained, but satisfactory luminance and colour purity cannot be obtained and deterioration by ion bombardment, etc. occurs. Thus these problems need to be urgently resolved.

SUMMARY OF THE INVENTION

The present embodiments provide a phosphor composition for a plasma display panel (PDP) having good discharge property and colour purity and an increased lifespan due to prevention of deterioration by plasma, and a PDP having a phosphor layer composed of the same.

According to one aspect of the present embodiments, there is provided a phosphor composition for a PDP including a phosphor component which is a zinc silicate-based phosphor represented by formula (1) or a mixture of the zinc silicate-based phosphor represented by formula (1) and at least one further phosphor; and a continuous crystalline metal oxide layer composed of at least one positively charged metal oxide formed on the phosphor component:

$$Zn_2SiO_4\text{:Mn} \qquad (1).$$

The amount of positively charged metal oxide in the continuous crystalline metal oxide layer is preferably from about 0.01 to about 10 parts by weight based on 100 parts by weight of the phosphor component, particularly from about 0.05 to about 2 parts by weight based on 100 parts by weight of the phosphor component. The thickness of the continuous crystalline metal oxide layer can range from about 1 to about 30 nm. A preferred average particle diameter of the phosphor composition according to the present invention ranges from about 1 to about 10 $\mu$m.

According to a preferred embodiment of the present invention the phosphor composition for a PDP has a zeta potential of from about 20 to about 40 mV.

It is further preferred that the at least one positively charged metal oxide of the metal oxide layer is selected from the group consisting of yttrium oxide, aluminium oxide, magnesium oxide, lanthanum oxide, iron oxide, zinc oxide, europium oxide and cobalt oxide.

From this group yttrium oxide ($Y_2O_3$) is highly preferred as metal oxide. Thus, the amount of yttrium oxide in the continuous crystalline metal oxide layer is preferably from about 0.01 to about 10 parts by weight based on 100 parts by weight of the phosphor component, particularly from about 0.05 to about 2 parts by weight based on 100 parts by weight of the phosphor component.

According to another embodiment of the invention the at least one further phosphor is selected from the group consisting of a $Y_2O_3$:Eu, $(Y,Gd)_2O_3$:Eu, $(Ba,Mg,Sr)Al_{12}O_{19}$:Mn and $BaAl_{12}O_{19}$:Mn or others.

According to another aspect of the present invention, there is provided a phosphor composition for a PDP including: a zinc silicate-based phosphor represented by formula (1); and a continuous crystalline metal oxide layer composed of yttrium oxide ($Y_2O_3$) formed on the zinc silicate-based phosphor:

$$Zn_2SiO_4:Mn \quad (1).$$

The amount of yttrium oxide in the continuous crystalline metal oxide layer can be from about 0.01 to about 10 parts by weight, preferably from about 0.05 to about 2.0 parts by weight, based on 100 parts by weight of the zinc silicate-based phosphor, and the thickness of the continuous crystalline metal oxide layer may be from about 1 to about 30 nm.

The phosphor composition for a PDP may have an average particle diameter of from about 1 to about 10 $\mu$m.

According to another aspect of the present embodiments, there is provided a phosphor composition for a PDP including: a uncoated phosphor; and a metal oxide layer including a positively charged metal oxide formed on the uncoated phosphor, the phosphor for a PDP having a zeta potential of from about 20 to about 40 mV.

The metal oxide layer can be composed of at least one selected from the group consisting of yttrium oxide, aluminium oxide, magnesium oxide, lanthanum oxide, iron oxide, zinc oxide, europium oxide and cobalt oxide. The metal oxide layer may be a continuous crystalline metal oxide thin layer.

The uncoated phosphor may be at least one phosphor selected from the group consisting of a zinc silicate-based phosphor represented by Formula (1), $Y_2O_3$:Eu, $(Y,Gd)_2O_3$:Eu, $(Ba,Mg,Sr)Al_{12}O_{19}$:Mn and $BaAl_{12}O_{19}$:Mn:

$$Zn_2SiO_4:Mn \quad (1).$$

According to another aspect of the present invention, there is provided a PDP having a phosphor layer composed of the phosphor composition as described above. The PDP may further comprise a transparent front substrate; a rear substrate disposed parallel to the front substrate; light emitting cells separated by barrier walls interposed between the front substrate and the rear substrate; address electrodes extended over the light emitting cells extending in one direction; a rear dielectric layer covering the address electrodes; a phosphor layer comprising the phosphor composition disposed in the light emitting cells; sustain electrode pairs extending perpendicular to the address electrodes; a front dielectric layer covering the sustain electrode pairs; and a discharge gas in the light emitting cells.

According to yet another aspect of the present invention, there is provided a method of preparing a phosphor composition as described above comprising the steps of dissolving at least one metal salt in water and another solvent; adding the phosphor component which is a zinc silicate-based phosphor represented by formula of $Zn_2SiO_4$:NM or a mixture of the zinc silicate-based phosphor represented by formula of $Zn_2SiO_4$:Mn and at least one further phosphor; filtering the mixture; removing the solvent; drying and firing the resultant; and subjecting the resultant to thermal treatment.

BRIEF DESCRIPTION OF THE DRAWINGS

The above and other features and advantages of the present embodiments will become more apparent by describing in detail exemplary embodiments thereof with reference to the attached drawings in which:

FIG. 1 is an exploded perspective view of a plasma display panel according to one embodiment;
FIGs. 2A through 2F illustrates discharge voltages of PDPs manufactured in Examples 1-4 and Comparative Examples 1 and 2; and
FIG. 3 a photograph of a phosphor for a PDP including the $Zn_2SiO_4$:Mn phosphor and a continuous crystalline yttrium oxide layer formed on the $Zn_2SiO_4$:Mn phosphor according to some embodiments.

DETAILED DESCRIPTION OF THE INVENTION

A zinc silicate-based phosphor represented by formula (1) (referred to as "phosphor P1") has better luminance, colour coordinate and lifespan than the prior art, and thus is a particularly advantageous green phosphor for a PDP:

$$Zn_2SiO_4:Mn \quad (1).$$

However, since phosphor P1 has a negatively charged surface, it has higher discharge voltage than phosphors with other colours and can be deteriorated by ion bombardment. To solve these problems, mixtures of different phosphors can be used. When this is done the discharge voltage can be somewhat improved, however, optical characteristics are deteriorated.

A P1 phosphor having a continuous crystalline layer of a positively charged metal oxide according to some embodiments has an improved discharge property in a panel. Further, the continuous crystalline metal oxide layer which is resistant to bombardment due to plasma and has a low reactivity to the phosphor P1 acts as a protecting layer, and thus the lifespan of the phosphor P1 can be increased.

Examples of the metal oxide include yttrium oxide ($Y_2O_3$), aluminium oxide, magnesium oxide, lanthanum oxide, iron oxide, zinc oxide, europium oxide, cobalt oxide and the like. If yttrium oxide is used as the metal oxide, it has a positively charging capability, thereby solving the discharge problem, and has a low reactivity to phosphor P1 and can most effectively protect phosphor P1 from deterioration by sputtering.

Due to these characteristics, the phosphor of the present embodiment can be used alone and the amount thereof in the panel can be increased. Even when the phosphor is mixed with $YBO_3$:Tb, $BaAl_{12}O_{19}$:Mn, etc., optical characteristics can be improved by minimizing the mixing amounts of $YBO_3$:Tb, $BaAl_{12}O_{19}$:Mn, etc.

In the phosphor having a continuous crystalline metal oxide layer, the amount of yttrium oxide may be from about 0.01 to about 10 parts by weight, preferably from about 0.05 to about 2.0 parts by weight, based on 100 parts by weight of phosphor P1.

A phosphor for a PDP according to another embodiment includes an uncoated phosphor and a metal oxide layer composed of a positively charged metal oxide formed on a surface of the uncoated phosphor which can have a zeta potential from about 20 to about 40 mV.

The uncoated phosphor is not particularly restricted and examples thereof include $Zn_2SiO_4$:Mn, $Y_2O_3$:Eu, (Y, Gd)$_2O_3$:Eu, (Ba,Mg,Sr)Al$_{12}O_{19}$:Mn, $BaAl_{12}O_{19}$:Mn, etc. Examples of the positively charged metal oxide include yttrium oxide, aluminium oxide, magnesium oxide, lanthanum oxide, iron oxide, zinc oxide, europium oxide, cobalt oxide and the like and the amount thereof can be from about 0.01 to about 10 parts by weight, in particular from about 0.05 to about 2.0 parts by weight, based on 100 parts by weight of the uncoated phosphor.

The thickness of the metal oxide layer can be from about 1 to about 30 nm and the phosphor for a PDP can have an average particle diameter of from about 1 to about 10 $\mu$m.

A method of preparing a phosphor for a PDP according to some embodiments using a sol-gel process will now be described.

First, an yttrium salt is dissolved in water and a solvent and the phosphor P1 is added thereto and mixed. The yttrium salt may be $Y(NO_3)_3$-6$H_2O$, $Y(CH_3CO_2)_3$, $YCl_3$, etc., and the amount thereof is selected such that the amount of yttrium oxide coated on the phosphor P1 is from about 0.01 to about 10 parts by weight, preferably from about 0.05 to about 2 parts by weight, based on 100 parts by weight of the phosphor P1.

The solvent may be, for example, 2-methoxyethanol, 2-ethoxyethanol, etc., and the amount thereof may be from about 1,000 to about 10,000 parts by weight based on 100 parts by weight of the yttrium salt.

The mixture is filtered and the solvent is removed. Then, the resultant is dried and fired. The firing process can be performed under an oxygen atmosphere to form the yttrium oxide layer from yttrium hydroxide and an organic material-yttrium compound deposited on the phosphor. In this process, organic materials are perfectly fired and removed. The firing temperature may be from about 350 to about 900°C.

Thereafter, the resultant is subjected to thermal treatment, thereby obtaining a phosphor composition for a PDP having a continuous crystalline metal oxide layer composed of yttrium oxide formed thereon. The thermal treatment can be performed under an inert gas atmosphere. The inert gas may be, for example, $N_2$ gas. The phosphor is oxidized in the burning process, and thus the luminance is reduced. The reduced luminance can be recovered by the thermal treatment under the reduction atmosphere.

The thermal treating temperature may be from about 500 to about 900°C.

The yttrium oxide layer formed on the phosphor composition can be a continuous crystalline layer.

The thickness of the yttrium oxide layer may be from about 1 to about 30 nm as described above.

The phosphor composition may have an average particle diameter of from about 1 to about 10 $\mu$m.

A method of preparing a phosphor for the PDP according to certain embodiments will now be described.

The phosphor composition according to another embodiment is prepared in the same manner as in the preparation of the phosphor according to the above embodiment, except that in addition to the yttrium salt, metal oxide precursors such as aluminium oxide, magnesium oxide, lanthanum oxide, iron oxide, zinc oxide, europium oxide, and cobalt oxide are used and phosphors other than the phosphor P1 may be used as the uncoated phosphor.

The metal oxide layer may be a continuous crystalline metal oxide thin layer.

The thickness of the metal oxide layer may be from about 1 to about 30 nm as described above.

The phosphor may have an average particle diameter of from about 1 to about 10 $\mu$m.

A PDP employing a phosphor layer composed of the phosphor composition according to the present embodiments will now be described.

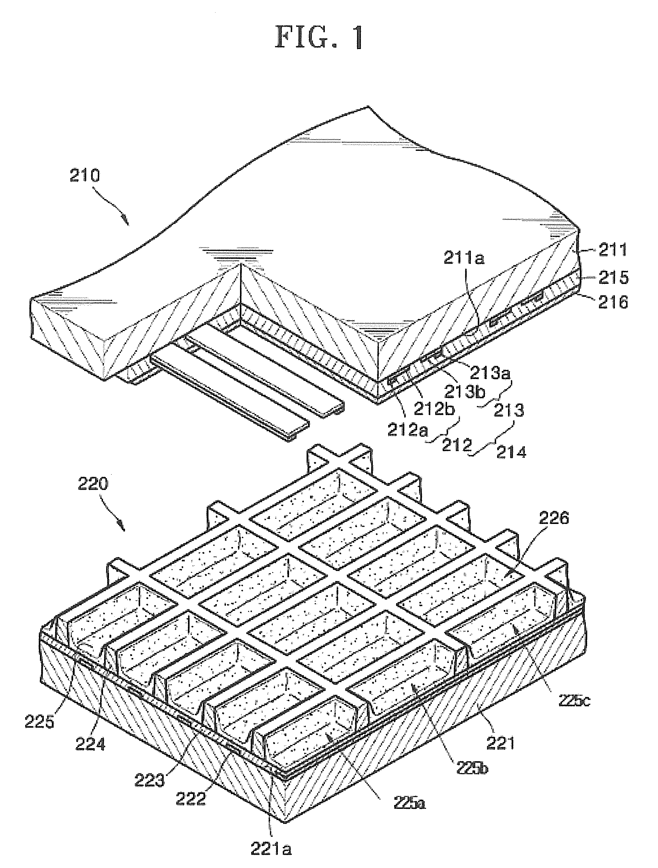

A PDP according to some embodiments includes: a transparent front substrate; a rear substrate disposed parallel to the front substrate; light emitting cells separated by barrier walls interposed between the front substrate and the rear substrate; address electrodes extended over light emitting cells extending in one direction; a rear dielectric layer covering the address electrodes; a phosphor layer disposed in the light emitting cells; sustain electrode pairs extending perpendicular to the address electrodes; a front dielectric layer covering the sustain electrode pairs; and a discharge gas in the light emitting cells. The structure of the PDP will now be described in more detail with reference to FIG. 1.

Referring to FIG. 1, the PDP includes a front panel 210 and a rear panel 220.

The front panel 210 includes: a front substrate 211; sustain electrode pairs 214 disposed on the rear surface of the front substrate 211 and extending along a row of light emitting cells 226; a front dielectric layer 215 covering the sustain electrode pairs; and a protecting layer 216 covering the front dielectric layer 215.

The rear panel 220 includes: a rear substrate 221 disposed parallel to the front substrate; address electrodes 222 disposed on a front surface 221a of the rear substrate 221 and extending perpendicular to the sustain electrode pairs 214; a rear dielectric layer 223 covering the address electrodes 222; barrier walls 224 interposed between the front substrate 211 and the rear substrate 221, more particularly on the rear dielectric layer 223 to separate the light emitting cells 226; and a red phosphor layer 225a, a green phosphor layer 225b and a blue phosphor layer 225c respectively composed of red, green and blue phosphors which absorb ultra violet rays emitted from a discharge gas due to a sustain discharge in the barrier wall 224 to emit visible light.

In some embodiments, the green phosphor layer 225b is composed of a phosphor layer composition including the phosphor represented by formula (1).

A method of preparing a phosphor layer using the phosphor layer composition is not particularly limited and encompasses any method of preparing a phosphor layer.

For example, the phosphor or phosphor composition can be mixed with a binder and a solvent for facilitating printing to form a paste, and then printed using a screen method through a screen mesh. The resultant is dried and fired to obtain the phosphor layer.

The drying temperature can be from about 100 to about 150°C and the firing temperature can be from about 350 to about 600°C, preferably about 450°C at which organic materials in the paste are removed.

Ethyl cellulose can be used as the binder and the amount thereof can be from about 10 to about 30 parts by weight based on 100 parts by weight of the phosphor.

Butyl carbitol (BCA) or Terpineol, for example, can be used as the solvent and the amount thereof can be from about 70 to about 300 parts by weight based on 100 parts by weight of the phosphor.

The viscosity of the phosphor layer composition can be from about 5,000 to about 50,000 cps, preferably about 20,000 cps.

The red and blue phosphor layers are not particularly restricted and include those that can be commonly used in the manufacturing of a PDP. Examples of the red phosphor include $(Y,Gd)BO_3{:}Eu$, $Y(V,P)O_4{:}Eu$, etc., and examples of the blue phosphor include $BaMgAl_{10}O_{17}{:}Eu$, $CaMgSi_2O_6{:}Eu$, etc..

The front substrate 211 and the rear substrate 221 can be composed of glass and the front substrate 211 preferably has high transmittance.

The address electrodes 222 disposed on the front surface 221a of the rear substrate 221 and extending along a row of the light emitting cells 226 can be composed of a metal with a high electrical conductivity, for example, Al. The address electrodes 222 are used for address discharge together with Y electrodes 212. The address discharge is used to select a light emitting cell 226 and a sustain discharge described below can occur in a light emitting cell 226 where address discharge occurs.

The address electrodes 222 are covered by the rear dielectric layer 223, which prevents damage to the address electrodes 222 due to the collision of charged particles during the address discharge. The rear dielectric layer 223 is composed of a dielectric substance capable of inducing charged particles. Examples of such a dielectric substance include $PbO$, $B_2O_3$, $SiO_2$, etc..

The barrier wall 224 separating the light emitting cells 226 is formed between the front substrate 211 and the rear substrate 221. The barrier wall 224 provides a discharge space between the front substrate 211 and the rear substrate 221, prevents crosstalk between adjacent light emitting cells 226, and increases the surface area of the phosphor layer 225. The barrier wall 224 is composed of a glass including Pb, B, Si, Al, O, etc., and includes, if necessary, a filler such as $ZrO_2$, $TiO_2$ or $Al_2O_3$ and a pigment such as Cr, Cu, Co, Fe or $TiO_2$.

The sustain electrode pairs 214 extend along a row of the light emitting cells 226 and are perpendicular to the address electrode 222. Each of the sustain electrode pairs 214 includes a pair of sustain electrodes 212 and 213 arranged in parallel and separated by a predetermined distance on the lower surface of the front substrate 211 such that a sustain discharge can occur between the pair of sustain electrodes 212 and 213. The sustain electrode 213 is an X electrode and the sustain electrode 212 is a Y electrode. The sustain discharge is caused by an electric potential difference between the X electrode 213 and the Y electrode 212.

The X electrode 213 and the Y electrode 212 respectively include transparent electrodes 213b and 212b and bus electrodes 213a and 212a and, in some cases, the scanning electrode and common electrode may be composed only of bus electrodes without transparent electrodes.

The transparent electrodes 213b and 212b are composed of a transparent material which is an electrical conductor and does not prevent light emitted from the phosphor from passing through the front substrate 211. An example of such a material is ITO (indium tin oxide). However, since a transparent electrical conductor such as ITO has a high resistance, when the sustain electrodes 212 and 213 are composed of only the transparent electrode, a voltage drop along the length of the transparent electrode is large, thereby increasing the electrical power required to drive the PDP and decreasing the response speed of an image. To improve this, the bus electrodes 213a and 212a can be composed of metal with a high electric conductance, for example, Ag, and are disposed at outer edges of the transparent electrodes.

The sustain electrodes 212 and 213 are covered by the front dielectric layer 215. The front dielectric layer 215 can prevent a direct current from flowing between the X electrode 213 and the Y electrode 212 and damaging the sustain electrodes 212 and 213 due to the collision of charged particles during the sustain discharge. The front dielectric layer 215 can be composed of a dielectric substance with a high transmittance, for example, PbO, $B_2O_3$, $SiO_2$, etc.

The protecting layer 216 can be formed on the front dielectric layer 215. The protecting layer 216 prevents damage to the front dielectric layer 215 due to the collision of charged particles during the sustain discharge and releases many secondary electrons upon the sustain discharge. The protecting layer 216 may be composed of MgO, for example.

A discharge gas is filled in the light emitting cell 226. The discharge gas is, for example, a Ne-Xe mixed gas containing from about 5 to about 10 wt% of Xe, and at least some or all of the Ne may be replaced with He.

The PDP of the present embodiments has a decay time of about 1 ms or less, and preferably from about 400 $\mu$s to about 1 ms. The colour temperature of the PDP can be about 8500 K and a white colour coordinate is approximately (0.285, 0.300).

The PDP according to the present embodiments is not limited to the structure of FIG. 1.

The present embodiments will now be described in greater detail with reference to the following examples. The following examples are for illustrative purposes only, and are not intended to limit the scope of the embodiments.

Example 1

6.0 parts by weight of $Y(NO_3)_3$-$6H_2O$ was dissolved in 194.0 parts by weight of 2-methoxyethanol. Then, 100 parts by weight of $Zn_2SiO_4$:Mn was added to the solution and stirred for 30 minutes to prepare a mixture A. The mixture A was filtered to remove the solvent. The resultant was dried and burned at 525°C for 1 hour. At this time, air was sufficiently supplied to achieve perfect combustion of organic materials.

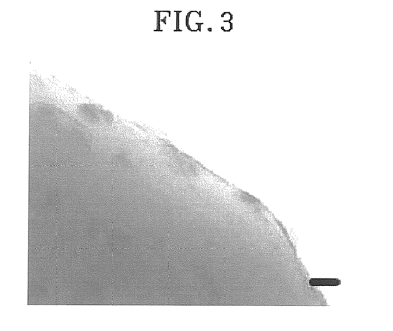

Thereafter, the resultant was subjected to thermal treatment under a 5 wt% $H_2$ and 95 wt% $N_2$ atmosphere at 600°C for 1 hour to obtain a phosphor composition (average particle diameter: 3.0 $\mu$m) for a PDP including the $Zn_2SiO_4$: Mn phosphor and a continuous crystalline yttrium oxide layer (average thickness: 5-10 nm) (FIG. 3) formed on the $Zn_2SiO_4$:Mn phosphor. Referring to FIG. 3, it can be seen that the yttrium oxide layer is a continuous crystalline thin layer. In FIG. 3, the black bar indicates 10 nm.

40 parts by weight of the phosphor composition, 8 parts by weight of ethyl cellulose as a binder and 52 parts by weight of Terpineol were mixed to prepare a green phosphor layer composition.

The green phosphor layer composition was screen printed on light emitting cells of a PDP, dried and burned at 480°C to form a green phosphor layer. A discharge gas in the PDP contained 93 wt% of Ne and 7 wt% of Xe.

Example 2

A green phosphor layer composition for a PDP was formed in the same manner as in Example 1, except that 4.5 parts by weight of $Y(NO_3)_3$-$6H_2O$ was dissolved in 195.5 parts by weight of 2-methoxyethanol, and then 100 parts by weight of $Zn_2SiO_4$:Mn was added thereto to prepare a mixture A.

### Example 3

A green phosphor layer composition for a PDP was formed in the same manner as in Example 1, except that 3.0 parts by weight of $Y(NO_3)_3\text{-}6H_2O$ was dissolved in 197.0 parts by weight of 2-methoxyethanol, and then 100 parts by weight of $Zn_2SiO_4$:Mn was added thereto to prepare a mixture A.

### Example 4

A green phosphor layer composition for a PDP was formed in the same manner as in Example 1, except that 9.0 parts by weight of $Y(NO_3)_3\text{-}6H_2O$ was dissolved in 191.0 parts by weight of 2-methoxyethanol, and then 100 parts by weight of $Zn_2SiO_4$:Mn was added thereto to prepare a mixture A.

### Comparative Example 1

A green phosphor layer for a PDP was formed in the same manner as in Example 1, except that a uncoated $Zn_2SiO_4$:Mn phosphor was used to prepare a green phosphor layer composition.

### Comparative Example 2

A green phosphor layer for a PDP was formed in the same manner as in Example 1, except that a mixture of uncoated $Zn_2SiO_4$:Mn and $YBO_3$:Tb phosphors was used to prepare a green phosphor layer composition.

### Comparative Example 3

66.02 g of an ethanol solution, 24.16 g of aluminium sec-butoxide and 25 g of water were mixed and stirred for 1 hour.
Then, 50 g of a $Zn_2SiO_4$:NM phosphor was added to the mixture and stirred. The resultant was filtered to remove the solvent. Then, thermal treatment was performed at 500°C in air for 1 hour, and then at 600°C under a 5 wt% $H_2$/95 wt% $N_2$ atmosphere for 1 hour to obtain a phosphor for a PDP.
40 parts by weight of the phosphor, 8 parts by weight of ethyl cellulose as a binder and 52 parts by weight of Terpineol were mixed to prepare a green phosphor layer composition.
The green phosphor layer composition was screen printed on light emitting cells of a PDP, dried and burned at 480°C to form a green phosphor layer. A discharge gas in the PDP contained 93 wt% of Ne and 7 wt% of Xe.
The zeta potential, lifespan, initial luminance, and colour reproduction area of phosphors for a PDP prepared in Examples 1-4 and Comparative Examples 1-3 were evaluated according to the following methods.

(1) Zeta potential

A phosphor sample was dispersed in pure water (pH: 5.8) by applying ultrasonic waves thereto for about 2 minutes. Then, the zeta potential of the phosphor was 5 times measured with Zetamaster (manufactured by MALVERN) and the measurements were averaged.

(2) Lifespan

The lifespan was evaluated through the luminance maintenance rate after driving a PDP for 50 hours. The luminance maintenance rate was represented by percentage of the luminance after 50 hours with respect to the initial luminance.

(3) Initial luminance

After a PDP was driven, the initial luminance was measured using CA100 (manufactured by MINOLTA).

(4) Colour reproduction area

The colour coordinates were measured using CA100 (manufactured by MINOLTA) and marked on a 1931-CIE chromaticity diagram. Then, the colour reproduction area enclosed by the marked colour coordinates was calculated.
The obtained results are indicated in Table 1.

Table 1

| | Zeta potential (mV) | Lifespan (%) | Initial luminance | Colour reproduction area (NTSC) | Remarks |
|---|---|---|---|---|---|
| Example 1 | +36.2 | 101% | 100 | 0.145 | - |
| Example 2 | +23.7 | 100% | 102 | 0.145 | - |
| Example 3 | +14.5 | 99% | 104 | 0.144 | - |
| Example 4 | +40.4 | 101% | 96 | 0.145 | - |
| Comparative Example 1 | -26.5 | 96% | 100 | 0.143 | Poor discharge and lifespan |
| Comparative Example 2 | +10.2 | 97% | 103 | 0.135 | Unfavourable colour reproduction |
| Comparative Example 3 | +45 | 95% | 82 | 0.144 | Poor luminance and lifespan |

Referring to Table 1, the phosphors of Examples 1-4 have higher luminance maintenance rates after driving for 50 hours than the phosphors of Comparative Examples 1-3, indicating that a phenomenon in which the luminance and colour of a pattern is different from the vicinity of the pattern due to deterioration of a phosphor of the pattern when a PDP is driven can be improved. Although the initial luminance of Comparative Example 2 is somewhat good, optical characteristics of Examples 1-4 are better than those of Comparative Examples 1-3 when the colour reproduction area is considered.

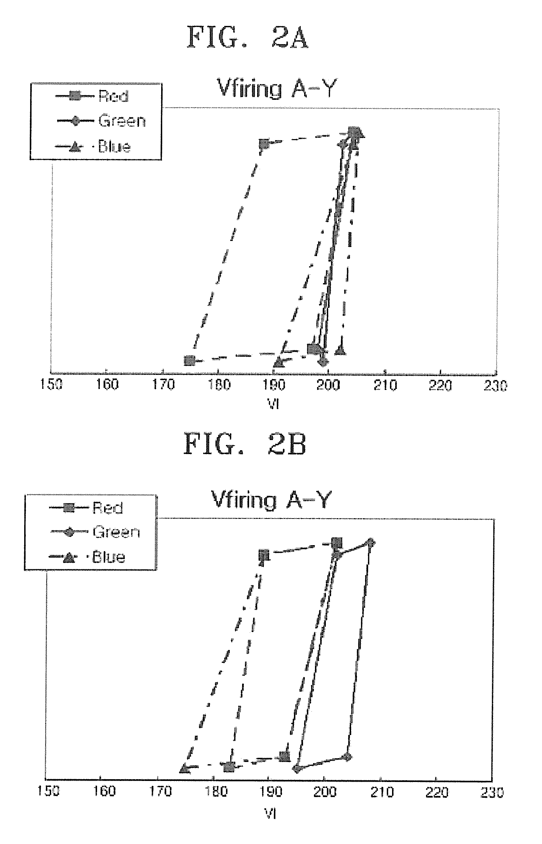

FIGs. 2A through 2F illustrates discharge voltages measured on PDPs manufactured in Examples 1-4 and Comparative Examples 1-2.

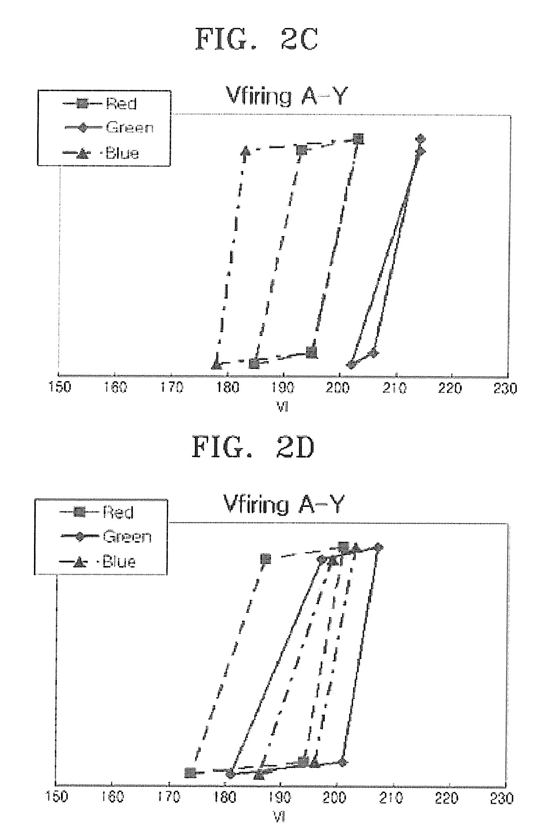

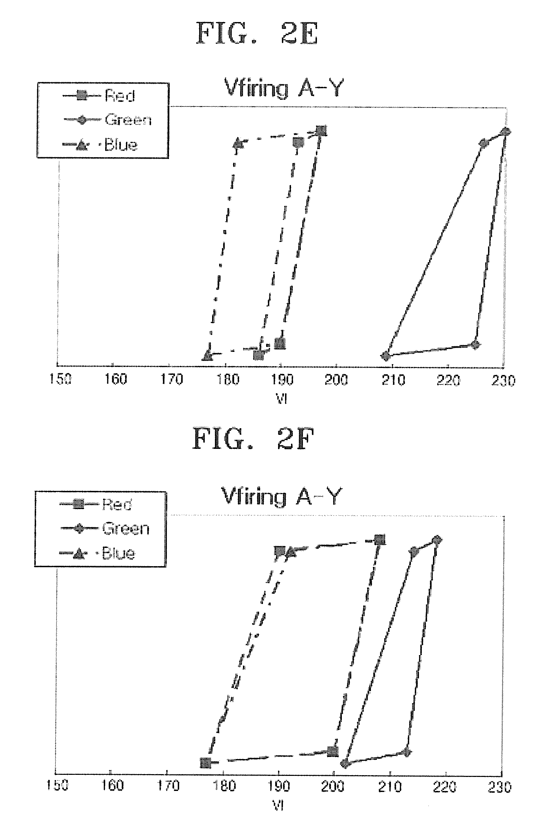

In FIGs. 2A through 2F, the x axis denotes a driving voltage Vf and each area denotes a region in which a PDP was turned on and discharge occurs. It is preferred that regions of various colours where discharge occurs are not different from each other and are overlapped. Referring to FIG. 2, as the amount of yttrium oxide increases, regions of various colours where discharge occurs become closer to each other, which is advantageous in discharge.

Referring to FIGs. 2A through 2F, the green colour discharge voltage regions of Examples 1-4 are close to the red and blue discharge voltage regions thereof compared to the green colour discharge voltage region of Comparative Example 2. The three colour discharge voltage regions of Example 3 are closer to one another compared to Comparative Example 1. Thus, it can be seen that the phosphor of Example 3 has better discharge properties than that of Comparative Example 1.

The phosphor for a PDP according to some embodiments has a continuous crystalline layer composed of a positively charged metal oxide such as yttrium oxide, and thus has improved surface properties, which can be identified by zeta potential. The metal oxide layer acts as a protecting layer to prevent deterioration of the phosphor due to ion bombardment.

When the phosphor is used to manufacture a green phosphor layer for a PDP, a green discharge voltage can be controlled to levels of red and blue colours due to a better surface charge property and a poor specific gradation discharge problem can be resolved. Due to the formation of the metal oxide layer, deterioration of the phosphor by ion bombardment is prevented and the luminance maintenance rate after driving a PDP and the lifespan of the phosphor are improved. The time it takes for a permanent afterimage to appear is delayed, which is a main item in the evaluation of a panel. In addition, the phosphor according to some embodiments is used alone to form a phosphor layer due to its better discharge property. When the phosphor layer is used, green colour purity is improved and the range of colour reproduction is broadened.

While the present embodiments have been particularly shown and described with reference to exemplary embodiments thereof, it will be understood by those of ordinary skill in the art that various changes in form and details may be made therein without departing from the spirit and scope of the present embodiments as defined by the following claims.

**Claims**

1. A phosphor composition for a plasma display panel (PDP) comprising:

    a phosphor component which is a zinc silicate-based phosphor represented by formula (1) or a mixture of the zinc silicate-based phosphor represented by formula (1) and at least one further phosphor

$$Zn_2SiO_4:Mn \quad (1);$$

    and a continuous crystalline metal oxide layer composed of at least one positively charged metal oxide formed on the phosphor component.

2. The phosphor composition of claim 1, wherein the amount of the positively charged metal oxide in the continuous crystalline metal oxide layer is from about 0.01 to about 10 parts by weight based on 100 parts by weight of the phosphor component, particularly from about 0.05 to about 2 parts by weight based on 100 parts by weight of the phosphor component.

3. The phosphor composition of claim 1 or 2, wherein the thickness of the continuous crystalline metal oxide layer is from about 1 to about 30 nm.

4. The phosphor composition according to one of the preceding claims, having an average particle diameter of from about 1 to about 10 $\mu$m.

5. The phosphor composition according to one of the preceding claims, wherein the phosphor composition for a PDP has a zeta potential of from about 20 to about 40 mV.

6. The phosphor composition according to one of the preceding claims, wherein the metal oxide layer comprises at least one positively charged metal oxide selected from the group consisting of yttrium oxide, aluminium oxide, magnesium oxide, lanthanum oxide, iron oxide, zinc oxide, europium oxide and cobalt oxide.

7. The phosphor composition according to claim 6, wherein the metal oxide layer is composed of yttrium oxide ($Y_2O_3$).

8. The phosphor composition of claim 7, wherein the amount of yttrium oxide in the continuous crystalline metal oxide layer is from about 0.01 to about 10 parts by weight based on 100 parts by weight of the phosphor component, particularly from about 0.05 to about 2 parts by weight based on 100 parts by weight of the phosphor component.

9. The phosphor composition according to one of the preceding claims, wherein the at least one further phosphor is a phosphor selected from the group consisting of a $Y_2O_3$:Eu, $(Y,Gd)_2O_3$:Eu, $(Ba,Mg,Sr)Al_{12}O_{19}$:Mn and $BaAl_{12}O_{19}$:Mn.

10. A PDP having a phosphor layer comprising a phosphor composition according to one of claims 1 to 9.

11. A PDP according to claim 10 further comprising:

    a transparent front substrate (211);
    a rear substrate (221) disposed parallel to the front substrate (211);
    light emitting cells (226) separated by barrier walls (224) interposed between the front substrate (211) and the rear substrate (221);
    address electrodes (222) extended over the light emitting cells (226) extending in one direction;
    a rear dielectric layer (223) covering the address electrodes (222);
    a phosphor layer (225) comprising the phosphor composition disposed in the light emitting cells (226);
    sustain electrode pairs (214) extending perpendicular to the address electrodes (222);
    a front dielectric layer (215) covering the sustain electrode pairs (214);
    and a discharge gas in the light emitting cells (226).

12. A method of preparing a phosphor composition according to one of claims 1 to 8 for a PDP comprising:

dissolving at least one metal salt in water and another solvent;
adding the phosphor component which is a zinc silicate-based phosphor represented by formula (1) or a mixture of the zinc silicate-based phosphor represented by formula (1) and at least one further phosphor

$$Zn_2SiO_4:Mn \quad (1);$$

filtering the mixture;
removing the solvent;
drying and firing the resultant; and
subjecting the resultant to thermal treatment.

# FIG. 1

# FIG. 2A

# FIG. 2B

FIG. 2C

FIG. 2D

# FIG. 2E

# FIG. 2F

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9070936 A
- JP 10258297 A